# EUROPEAN PATENT SPECIFICATION

(11) **EP 2 746 048 B1**
(45) Date of publication and mention of the grant of the patent: **18.07.2018**
(21) Application number: 12198237.5
(22) Date of filing: 19.12.2012
(51) Int. Cl.: B32B 27/08, B32B 27/30, B32B 27/32, B32B 27/36, B32B 27/34, B32B 7/12

(54) **Flow pack**
Flowpack
Bloc d'écoulement

(43) Date of publication of application: 25.06.2014
(73) Proprietor: Amcor Flexibles Kreuzlingen AG, 8280 Kreuzlingen (CH)
(72) Inventor: Malfait, Tony, 8880 Rollegem-Kapelle (BE); Perez Moreno, Ana, 08018 Barcelona (ES); Ourieva, Galina, 7750 Amougies (BE); Jouvanceau, Fabien, 6100 Saint Germain du Corbeis (FR)
(74) Representative: Pronovem

(56) References cited:
- EP-A1- 1 685 954
- EP-A1- 2 540 492
- WO-A1-2009/130070
- US-A1- 2002 122 933

## Description

### Field of the Invention

The present invention relates to flexible packaging, and in particular to a flow pack comprising a peelable polymer-based film.

### State of the Art

The goal of peelable films in flexible packaging is to provide easy opening of a pack without physical damage to the pack caused by the use of a knife, scissors or by manual tearing and breaking by the end-user. High-quality peel systems nowadays provide a smooth peeling without layer split-offs, fibre lifting, bearding, zipping or peel trace disruptions during the opening of the seam.

During the production of films and laminates, peelability is obtained by a variety of methods. In the down-stream converting operations typically, lacquers and hot-melts are applied. Examples are peelable coatings on aluminium, paper or synthetic paper substrates such as spun-bonded materials (e.g. Tyvek from Dupont).

In terms of costs, peelable films are preferably manufactured by a one-step (co-)extrusion process. Conventional extrusion processes are blown, cast and extrusion coating. In these processes, polymers, polymer combinations or blends are added in one or more of the layers so that the sealable side in contact with the substrate has a controlled reduction of seal strength compared to a lock seal. This so-called peel force/peel strength allows the consumer to open the pack in a convenient and user-friendly way. In some cases, inorganic filler materials are also used instead of polymeric materials in order to obtain peelable seals. However, when the film transparency becomes a critical parameter, polymer-blend solutions are the favoured approach.

Usually, to obtain a peelable seal against polyolefins (PE or PP), polyolefinic incompatible blends are used to obtain the easy-to-peel behaviour. Blend components are selected in such a way that the major polyolefinic components form the matrix phase, selected to be compatible with the sealable substrate, and one or more minor components, partially incompatible with the matrix, create the peel behaviour. In some cases, further additional components are added for optimizing the compatibility of the matrix with the dispersed phase.

A large number of peelable applications against polyolefinic substrates are based on this principle and result in so-called cohesive failure during peeling. In other words, the splitting occurs in the weakened seam, leaving a visible peel trace on both separated films. In a perfect peel, this mechanism provides a smooth opening with a broad operational window having consistent peel forces over a considerable sealing-temperature range.

The particular choice of the different polyolefinic blend partners in terms of alpha-olefin types, co-monomer content, branching level, branching distribution, isotacticity, etc. largely depends on the requirements of the end application: packaging speeds, mechanical properties, sterilization resistance, magnitude of peel force, broadness of the peel force window, etc.

Alternative polymeric materials are also commercially available in order to seal onto polyolefins. Examples are functionalized polymers such as ionomers giving rise to the so-called burst-peel behaviour during opening. This technology is well-established for particular applications such as cereal liners or for sealing through contamination, but has the disadvantage of high resin prices combined with some inherent processing complexities compared to basic polyolefins.

For sealing and peeling against non-polyolefinic substrates, the use of functionalized polymers is difficult to avoid. Due to the non-polar nature of the polyolefins, PE and PP hardly show any adhesion to materials like rigid amorphous PET (APET) and PETG bottom webs. Therefore, blends of EVA, EMA, EBA, EAA, ionomers, grafted polymers are used as sealant layers. Examples of these are the Appeel and Bestpeel from Dupont and Arkema, respectively.

Apart from the selling prices of these polymers, a further disadvantage is their inherent stickiness and softness, particularly for the higher co-monomer content levels. Peeling of such systems against non-polyolefinic substrates is therefore by definition almost adhesive-like and occurs at the interface between the sealant layer and the surface of the substrate.

Actually, the tackiness and pressure-sensitive nature of these materials provides a non-selective sealing against almost any substrate. However, the stickiness of high co-monomer content polymers is difficult to handle in an extrusion operation. In a traditional blown-film operation, the film is hard to separate after collapsing, wrinkles appear due to sticking to the guidance rollers and during winding, the film starts to self-adhere upon pressure in master jumbo reels.

This stickiness becomes even more pronounced when the film is corona-treated during extrusion in order to be laminated further downstream. In the wound reel, the polar surface of the corona-treated lamination easily adheres with the polar surface of the peelable-seal layer. Therefore, high levels of slip combined with anti-blocking agents in the layers are required to avoid blocked reels. When the anti-blocking level is insufficient, high pressure is required during unwinding of the reels in the lamination step. The film therefore risks becoming permanently stretched or deformed, which results in tunnels in the laminate. Combined with a poor operational performance, low speeds and high-scrap level, the presence of anti-block systems deteriorates the optics of the end laminate.

In bulk fresh-food markets, as for instance for the packaging of cheese and meat, the packaging end quality is a key factor. In those products, barrier, peel behaviour and optical performance should be combined to the highest level. Driven by strong price pressure in this market area, the end packer tends to move away from traditional thermoformed rigid PE/APET bottom web with a sealant PE-based lid and with the peelable system in either the bottom or the top, to a pure high-clarity APET system with a peelable lid against APET. For the technical reasons described above, the adhesive systems based on functionalized polymers do not provide an economical and technical valuable solution to follow this market trend.

Another example is in the medical device market, where current peelable lidding films based on crystal-clear PETG trays have their transparency reduced by the use of high anti-block formulated EVA peelable materials, combined with the potential risk of having the packaged product stick on the lidding film after the pack is opened.

The document EP 1 312 470 A discloses a peelable lidding film to be sealed on PET-based substrates without functional polymers causing blocking risk. This tamper-evident film is however not transparent.

The document EP 1 685 954 discloses another peelable lidding film to be sealed on PET substrates using a tackified pressure-sensitive adhesive layer providing resealability. In addition to the fact that the disclosed packaging is reasealable, which may be undesirable in some particular applications, the use of tackifying resins also presents some drawbacks, such as the risk of migration of low molecular weight species through the thin breakable sealant layer. Such low molecular weight species may for example change the organoleptic properties of the content of the package or present toxicological issues.

Even cohesive peelable solutions based on a PETG matrix with dispersed PE and/or functionalized PE polymers such as EVA, EMA, EBA, EAA, ionomers, grafted polymers have been proposed in the market, but these blends suffer from an insufficient balance in compatibility between the two phases. As a result, long extrusion runs end-up with significant material exudation and die-deposits requiring frequent die-lips or die-head cleaning, and hence a non-economical operation.

### Aims of the Invention

The present invention aims to provide a flow pack comprising a multilayer peelable film to be sealed on itself and a process for the preparation of said film.

### Summary of the Invention

The present invention is related to a flow pack comprising a peelable film, said film comprising a coextruded multilayer structure, said structure comprising:
- a rupturable polyester-based inner sealant layer;
- an adhesive layer in contact with said rupturable layer, comprising a polymer selected from the group consisting of ionomers, maleic anhydride grafted polyolefin, EVA, EBA, EMA and EAA ;
- a gas-barrier layer in contact with said adhesive layer, comprising a gas-barrier polymer selected from the group consisting of polyester, EVOH and polyamide;
- an outer sealant layer comprising a polymer selected from the group consisting of amorphous polyester, preferably APET, copolymer of PET, preferably PETG, and polyvinyl chloride;
wherein the delamination of said adhesive layer and said rupturable layer, in use, is characterized by a first break strength and an average peel strength, said average peel strength being lower than 15N/15 mm, preferably lower than 13N/15mm as measured in a 180° peel geometry.

According to particular preferred embodiments, the flow pack of the invention comprises one or a suitable combination of at least two of the following features:
- the first break strength between the adhesive layer and the inner sealant layer is lower than 18N/15 mm, preferably lower than 16N/15mm as measured in a 180° peel geometry;
- the ratio between the first break strength and the average peel strength is between 1.6 and 1.1;
- the thickness of the inner sealant layer is lower than 10µm and preferably lower than 5µm;
- the adhesive layer (2) comprises a maleic anhydride grafted polyolefin;
- the barrier layer has an oxygen transmission rate measured at 23°C and 50% relative humidity lower than 1000 cc/m2.atm.day, preferably lower than 500 cc/m2.atm.day measured according to DIN 53380;
- the adhesive layer comprises a polymer selected from the group consisting of EVA, EBA, EMA and EAA;
- the multilayer structure further structure comprises a tie layer adjacent to the barrier layer;
- the flow pack comprises a lap seal wherein the rupturable polyester-based inner sealant layer is sealed onto the outer polyester based sealant layer.

The present invention additionally discloses a process for the preparation of the peelable film according to the invention comprising the steps of:
- extruding a polyolefin liner with the peelable film on each side in a symmetric configuration;
- separating the peelable film from the polyolefin liner;
- optionally an additional lamination step of the peelable film to a substrate.

### Brief Description of the Drawings

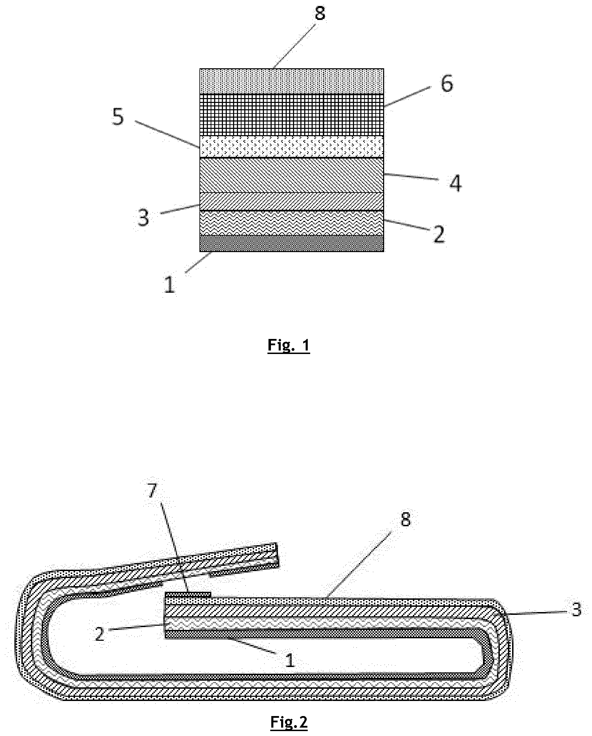

Fig. 1 represents an example of a peelable film suitable for forming a flow pack according to the invention.
Fig. 2 represents the opening process of a peelable flowpack according to the invention in a lap seal configuration.
Fig. 3 represents a typical peel test diagram of the seal of a peelable flow pack according to the invention.

### Keys

- 1.: Rupturable layer
- 2.: Adhesive layer
- 3.: Barrier layer
- 4.: Tie layer
- 5.: Lamination adhesive layer
- 6.: Support layer
- 7.: Seal seam after peeling
- 8.: Outer sealant layer
- 9.: Peak peel strength (breaking strength)
- 10.: Average peel strength

### Detailed Description of the Invention

The present invention relates to a flow pack comprising a peelable film to be sealed on itself, in particular in the form of a flow pack with a lap seal, wherein the inner layer of the peelable film is folded and sealed onto the outer layer of the film.

To achieve this aim, a very thin layer of polyester 1, such as PETG or APET, is coextruded along with an adhesive layer 2 on a barrier layer 3.

The barrier layer 3 is preferably selected from the group consisting of polyamide, EVOH, specific polyester types and their blends. Preferably, the barrier layer 3comprises polyamide and/or EVOH.

The adhesive layer 2 used in the present invention is of the type usually used as coextrusion tie layers. These are preferably selected from the group consisting of ionomers, maleic anhydride grafted polyolefins, ethylene vinyl acetate copolymers, ethylene vinyl acrylate copolymers such as EMA, EBA and EAA.

When used as tie layers, the level of grafting of the copolymer composition is selected in order to ensure a permanent adhesion of the tie layer on the adjacent layers. On the contrary, in the present invention, this adhesion (delamination strength) will be reduced in order to obtain acceptable peel strength.

This reduction may be obtained by using tie-resin grade usually considered as not suitable to adhere on a given adjacent layer, by diluting the adhesive resin with a polymer that is compatible with the adhesive resin, but having poor adhesion to the adjacent layer (for example LLDPE diluting EVA or maleic anhydride grafted PE).

The peel strength may also be reduced by using extrusion parameters that are different from those suggested by the adhesive resin supplier. For example, reducing the extrusion temperature may result in an adhesion reduction, giving the desired peelability. Reducing the tie-layer thickness may also reduce the adhesion strength.

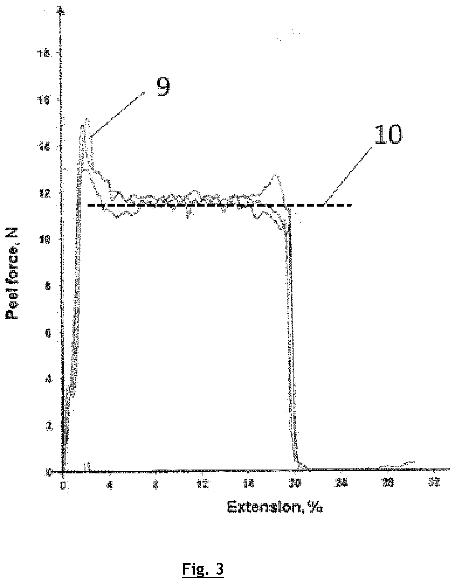

In the present invention, the peelability is obtained by first breaking the rupturable layer (peak strength observed in Fig.3), then propagating the rupture at the interface between the adhesive layer 2 and the rupturable layer 1, the propagation corresponding to the average peel strength 10 observed in Fig. 3 and the propagation leaving a delaminated seam 7 on the outer sealant layer 8. A second breaking of the rupturable layer is then needed to completely open the seal (secondary break).

Preferably, the adhesion between the polyester sealant layer 1 and the adhesive layer 2, as measured at 180° in a peel test with a cross-head speed of about 300 mm/min, is lower than 15N/15mm, preferably comprised between 13 and 6N/15mm. The adhesive strength is to be understood as the average peel strength 10 observed on a seal after breaking the sealant layer, such breaking appearing on the peel test diagram as a high peak 9 at the beginning of the peel process (see Fig. 3).

For an efficient and smooth peeling of a packaging, the ratio of the breaking peel strength 9 and the average peel strength 10 has to be in a certain range of about 2 and 1, and preferably between 1.6 and 1.1. Particularly preferred are ratio values between 1.4 and 1.2.

The peelability is obtained by delamination at the interface between the adhesive layer and the sealant layer. This latter should be as thin as possible. Therefore, the sealant layer has a thickness preferably lower than 15µm, advantageously lower than 10µm, more preferably lower than 5µm.

Advantageously, the thickness of the sealant layer is selected so that its breaking before peeling does not induce a peak peel strength of more than 18N/15mm, preferably not more than 16N/15mm (see Fig.4).

Usual barrier layers are very thin EVOH layers of less than 5µm. Therefore, such barrier layers are preferably supported by an additional support layer. This support layer may be for example a polyolefin layer based on polyethylene or polypropylene.

An additional bonding layer 4 may be coextruded along with the other layers, for example in order to ease a subsequent lamination process. If needed, an additional tie layer (not represented) may be needed between the barrier layer 3 and the bonding layer 4.

The coextruded peelable structure may be laminated onto an additional layer 6 such as a polyester layer, preferably on a PET-based layer. This lamination is performed using a usual adhesive layer 5.

As the coextruded structure is very thin, it is preferably produced using the process described in WO 2009/130070, which is referred to here. This document specifically discloses the extrusion of a symmetric structure supported by a central polyolefin liner. This liner supports the peelable film of the present invention on each side; the whole structure is later laminated on a substrate and then finally separated from this liner.

In order to provide sealing properties to the outer side of the film (side which forms the outer surface of the flow pack), an outer sealant layer is used. Such sealant layer comprises polymer(s) which easily adhere(s) to the inner sealant layer at sealing temperature that does not disturb at least one of the core layers. To this end, PVC or polyesters having low softening temperature are used. Example of suitable polyesters for this outer sealant layers are PETG, APET, or PET copolymers. Examples of preferred comonomers to be used in PET copolymers are isophtalic acid, phtalic acid and cyclohexene dimethanol. Any other comonomers known to reduce PET crytallinity such as lactic acid can also be used.

### Examples

### Example 1

A coextruded symmetric structure on each side of a polyethylene liner was first produced with the following layers:
- 10µm LLDPE Escorene LL 1001 KI (ExxonMobil)
- 3µm tie layer-anhydride grafted ethylene copolymer, Admer AT1955E (Mitsui Chemicals)
- 3µm EVOH (EVAL F171B) (Eval Europe)
- 3µm tie layer (Admer AT1955E)
- 3µm PETG (Eastar 6763)(Eastman)
- 18µm PE liner (Escorene LD 150 BW)
- 3µm PETG (Eastar 6763)(Eastman)
- 3µm tie layer (Admer AT1955E)
- 3µm EVOH (EVAL F171B)
- 3µm tie layer-anhydride grafted ethylene copolymer, Admer AT1955E (Mitsui Chemicals)
- 10µm Escorene LL 1001 KI (ExxonMobil)
An additional 23µm-thick bi-stretched PET layer was then laminated on both sides of the obtained coextruded structure. Then, as described in WO 2009/130070, two films having the intermediate structure PET//PE/tie layer/EVOH/tie layer/PETG were separated from the PE liner.

A PVC dispersion lacquering is then coated on top of the bi-stretched PET for forming the outer sealant layer. Alternatively, the PVC coating can be applied on both sides on the structure before the separation from the liner.

### Example 2

Example 2 is identical to Example 1 except that the PETG layer was 5µm thick.

### Example 3

Example 3 is identical to Example 1 except that the PETG layer thickness was 7µm.

### Example 4

Example 4 is identical to Example 1 except that Admer AT1955E was replaced by Bynel 22E780.

### Example 5

In example 5, EVOH was replaced by polyamide Akulon F132E and the PETG layer thickness was 5µm.

### Example 6

In Example 6, the EVOH layer was replaced by 15µm polyamide B/UBE 5033B and the PETG layer thickness was 7µm.

### Example 7

In example 7, the 23µm thick bi-stretched PET of example 1 was replaced by a bi-stretched film having a 23µm thick PET core layer with 5µm APET coextruded on both sides.

The oxygen transmission rate was measured on all films at 23°C, 50% R.H. The results are reported in cc/m2.atm.day in Table 1.

15mm-wide strips of the films were prepared for peeling tests. The inner sealant layers of the samples were sealed on the outer layer of the same film using the following conditions.

### Test setting conditions (Range of settings recommended for Multivac forming line)

Sealing Pressure*: 0.3-0.5 MPa
Sealing Temperature*: 140-180°C
Sealing time*: 1.1-1.6 seconds
Seal area width: Minimum 4mm
*(Optimized setting depends of general condition / age / reference of Multivac forming line)

The obtained seal was then peel-tested according to the following set-up.
Peel test with tensile tester: Hounsfield model H5KS
Load cell: of 100N
Grips: moving upper and static lower grips of 2.5cm wide
Rate of grip separation: 300mm/min
Peel test angle: T-peel test geometry
Sample width: 15mm
Room temperature (20 to 25°C)
   - A: First break strength in N/15mm (see ref. 9 in Fig. 3)
   - B: Peel strength in N/15mm(average value, see ref. 10 in Fig.3)

The results are summarised in Table 1.

| Example | Oxygen Transmission cc/m².atm. day (*) | A | B |
|---|---|---|---|
| 1 | 0.8 | 15.1 | 12.2 |
| 2 | 0.3 | 15.3 | 11.4 |
| 3 | 1.1 | 15.2 | 12.6 |
| 4 | 3.4 | 15.4 | 12.4 |
| 5 | 410 | 15.7 | 11.8 |
| 6 | 80 | 15 | 12.7 |
| 7 | 0.9 | 15.3 | 11.6 |

| | | | |
|---|---|---|---|
| (*) O₂ barrier measured at 23°C and 50% lower than 1000 cc/mz.atm.day, measured according to DIN 53380 | | | |

## Claims

1. A flow pack comprising a peelable film, said film comprising:
- a coextruded multilayer structure, said coextruded structure comprising:
• a rupturable polyester-based inner sealant layer (1);
• an adhesive layer (2) in contact with said rupturable layer (1), comprising a polymer selected from the group consisting of ionomers, maleic anhydride grafted polyolefin, EVA, EBA, EMA and EAA ;
• a gas-barrier layer (3) in contact with said adhesive layer (2), comprising a gas-barrier polymer selected from the group consisting of polyester, EVOH and polyamide;
- an outer sealant layer (8) comprising a polymer selected from the group consisting of amorphous polyester, preferably APET, copolymer of PET, preferably PETG, and polyvinyl chloride, said outer sealant layer being either coextruded with the multilayer structure, or applied in a subsequent step;
wherein the delamination of said adhesive layer (2) and said rupturable layer (1), in use, is **characterized by** a first break strength (9) and an average peel strength (10) measured as described herein, said average peel strength (10) being lower than 15N/15 mm, preferably lower than 13N/15mm as measured in a 180° peel geometry.

2. Flow pack according to Claim 1, wherein the first break strength (9) between the adhesive layer (2) and the inner sealant layer(1) is lower than 18N/15mm, preferably lower than 16N/15mm as measured in a 180° peel geometry.

3. Flow pack according to Claim 1 or 2, wherein the ratio between the first break strength (9) and the average peel strength (10) is between 1.6 and 1.1.

4. Flow pack according to any of the preceding claims, wherein the thickness of the inner sealant layer (1) is lower than 10µm, and preferably lower than 5µm.

5. Flow pack according to any of the preceding claims, wherein the adhesive layer (2) comprises a maleic anhydride grafted polyolefin.

6. Flow pack according to any of the preceding claims, wherein the barrier layer (3) has an oxygen transmission rate measured at 23°C and 50% relative humidity lower than 1000 cc/m2.atm.day, preferably lower than 500 cc/m2.atm.day measured according to DIN 53380.

7. Flow pack according to any of the preceding claims, wherein the adhesive layer (2) comprises a polymer selected from the group consisting of EVA, EBA, EMA and EAA.

8. Flow pack according to any of the preceding claims, further comprising a tie layer (4) adjacent to the barrier layer.

9. Flow pack according to any of the previous claims, further comprising an additional support layer between the outer sealant layer and the barrier layer, said support layer comprising a polymer selected from the group consisting of polyester and polyamide.

10. Flow pack according to Claim 9, wherein said support layer is metallised.

11. Flow pack according to Claim 9 or 10, wherein the support layer comprises bi-oriented PET.

12. Flow pack according to any of the previous claims, comprising a lap seal wherein the rupturable polyester-based inner sealant layer (1) is sealed onto the outer polyester based sealant layer.

## Patentansprüche

1. Flowpack, umfassend eine abziehbare Folie, wobei die Folie umfasst:
- eine coextrudierte Mehrschichtstruktur, wobei die coextrudierte Struktur umfasst:
• eine zerreißbare polyesterbasierte innere Versiegelungsschicht (1);
• eine Haftmittelschicht (2), die mit der zerreißbaren Schicht (1) in Kontakt steht, die eine Polymer umfasst, das aus der Gruppe ausgewählt ist, bestehend aus Ionomeren, maleinanhydridgepfropftem Polyolefin, EVA, EBA, EMA und EAA;
• eine Gasbarriereschicht (3), die mit der Haftmittelschicht (2) in Kontakt steht, die ein Gasbarrierepolymer umfasst, das aus der Gruppe ausgewählt ist, bestehend aus Polyester, EVOH und Polyamid;
- eine äußere Versiegelungsschicht (8), die ein Polymer umfasst, das aus der Gruppe ausgewählt ist, bestehend aus amorphem Polyester, vorzugsweise APET, Copolymer von PET, vorzugsweise PETG, und Polyvinylchlorid, wobei die äußere Versiegelungsschicht entweder mit der Mehrschichtstruktur coextrudiert oder in einem darauffolgenden Schritt aufgetragen wird;
wobei die Delaminierung der Haftmittelschicht (2) und der zerreißbaren Schicht (1) in Gebrauch durch eine erste Bruchfestigkeit (9) und eine durchschnittliche Abziehfestigkeit (10) gekennzeichnet sind, die wie hierin beschrieben gemessen werden,
wobei die durchschnittliche Abziehfestigkeit (10) bei Messung in einer 180°-Abziehgeometrie weniger als 15 N/15 mm, vorzugsweise weniger als 13 N/15 mm, beträgt.

2. Flowpack nach Anspruch 1, wobei die erste Bruchfestigkeit (9) zwischen der Haftmittelschicht (2) und der inneren Versiegelungsschicht (1) bei Messung in einer 180°-Abziehgeometrie weniger als 18 N/15 mm, vorzugsweise weniger als 16 N/15 mm, beträgt.

3. Flowpack nach Anspruch 1 oder 2, wobei das Verhältnis zwischen der ersten Bruchfestigkeit (9) und der durchschnittlichen Abziehfestigkeit (10) zwischen 1,6 und 1,1 liegt.

4. Flowpack nach einem der vorstehenden Ansprüche, wobei die Dicke der inneren Versiegelungsschicht (1) weniger als 10 µm und vorzugsweise weniger als 5 µm beträgt.

5. Flowpack nach einem der vorstehenden Ansprüche, wobei die Haftmittelschicht (2) ein maleinanhydridgepfropftes Polyolefin umfasst.

6. Flowpack nach einem der vorstehenden Ansprüche, wobei die Barriereschicht (3) eine Sauerstoffdurchlässigkeitsrate bei Messung bei 23 °C und 50 % relativer Feuchtigkeit gemäß DIN 53380 von weniger als 1000 cm³/m².atm.Tag, vorzugsweise weniger als 500 cm³/m².atm.Tag, aufweist.

7. Flowpack nach einem der vorstehenden Ansprüche, wobei die Haftmittelschicht (2) ein Polymer umfasst, das aus der Gruppe ausgewählt ist, bestehend aus EVA, EBA, EMA und EAA.

8. Flowpack nach einem der vorstehenden Ansprüche, der ferner eine Haftvermittlerschicht (4) der Barriereschicht benachbart umfasst.

9. Flowpack nach einem der vorstehenden Ansprüche, das ferner eine zusätzliche Trägerschicht zwischen der äußeren Versiegelungsschicht und der Barriereschicht umfasst, wobei die Trägerschicht ein Polymer umfasst, das aus der Gruppe ausgewählt ist, bestehend aus Polyester und Polyamid.

10. Flowpack nach Anspruch 9, wobei die Trägerschicht metallisiert ist.

11. Flowpack nach Anspruch 9 oder 10, wobei die Trägerschicht biorientiertes PET umfasst.

12. Flowpack nach einem der vorstehenden Ansprüche, das eine Überlappungsnaht umfasst, wobei die zerreißbare polyesterbasierte innere Versiegelungsschicht (1) auf die polyesterbasierte äußerste Versiegelungsschicht versiegelt ist.

## Revendications

1. Emballage thermo-soudé comprenant un film pelable, ledit film comprenant :
- une structure multicouche co-extrudée, ladite structure co-extrudée comprenant :
• une couche d'étanchéité interne déchirable (1) à base de polyester ;
• une couche adhésive (2) en contact avec ladite couche déchirable (1), comprenant un polymère choisi parmi le groupe constitué d'ionomères, de polyoléfine greffée d'anhydride maléique, EVA, EBA, EMA et EAA ;
• une couche de barrière aux gaz (3) en contact avec ladite couche adhésive (2) comprenant un polymère de barrière aux gaz choisi parmi le groupe constitué de polyester, EVOH et polyamide ;
- une couche d'étanchéité externe (8) comprenant un polymère choisi parmi le groupe constitué de polyester amorphe, de préférence APET, copolymère de PET, de préférence PETG et polychlorure de vinyle, ladite couche d'étanchéité externe étant soit co-extrudée avec la structure multicouche, soit appliquée dans une étape ultérieure ;
dans lequel la délamination de ladite couche adhésive (2) et de ladite couche déchirable (1), en cours d'utilisation, est **caractérisée par** une première résistance à la rupture (9) et une résistance au pelage moyenne (10) mesurées comme décrit ici,
ladite résistance au pelage (10) étant inférieure à 15 N/15 mm, de préférence inférieure à 13 N/15 mm telle que mesurée dans une géométrie de pelage à 180°.

2. Emballage thermo-soudé selon la revendication 1, dans lequel la première résistance à la rupture (9) entre la couche adhésive (2) et la couche d'étanchéité interne (1) est inférieure à 18 N/15 mm, de préférence inférieure à 16 N/15 mm, telle que mesurée dans une géométrie de pelage à 180°.

3. Emballage thermo-soudé selon la revendication 1 ou 2, dans lequel le rapport entre la première résistance à la rupture (9) et la résistance au pelage moyenne (10) se situe entre 1,6 et 1,1.

4. Emballage thermo-soudé selon l'une quelconque des revendications précédentes, dans lequel l'épaisseur de la couche d'étanchéité interne (1) est inférieure à 10 µm, et de préférence inférieure à 5 µm.

5. Emballage thermo-soudé selon l'une quelconque des revendications précédentes, dans lequel la couche adhésive (2) comprend une polyoléfine greffée d'anhydride maléique.

6. Emballage thermo-soudé selon l'une quelconque des revendications précédentes, dans lequel la couche barrière (3) a un taux de transmission de l'oxygène mesurée à 23°C et 50 % d'humidité relative inférieur à 1000 cm³/m².atm.jour, de préférence inférieure à 500 cm³/m².atm.jour mesuré selon DIN 53380.

7. Emballage thermo-soudé selon l'une quelconque des revendications précédentes, dans lequel la couche adhésive (2) comprend un polymère choisi parmi le groupe constitué d'EVA, EBA, EMA et EAA.

8. Emballage thermo-soudé selon l'une quelconque des revendications précédentes, comprenant en outre une couche de liaison (4) adjacente à la couche barrière.

9. Emballage thermo-soudé selon l'une quelconque des revendications précédentes, comprenant en outre une couche supplémentaire de support entre la couche d'étanchéité externe et la couche barrière, ladite couche de support comprenant un polymère choisi parmi le groupe constitué de polyester et polyamide.

10. Emballage thermo-soudé selon la revendication 9, dans lequel ladite couche de support est métallisée.

11. Emballage thermo-soudé selon la revendication 9 ou 10, dans lequel la couche de support comprend du PET bi-orienté.

12. Emballage thermo-soudé selon l'une quelconque des revendications précédentes, comprenant un joint de recouvrement dans lequel la couche d'étanchéité interne déchirable (1) à base de polyester est scellée sur la couche d'étanchéité externe à base de polyester.
